# EUROPÄISCHE PATENTSCHRIFT

(11) **EP 1 984 644 B1**
(45) Veröffentlichungstag und Bekanntmachung des Hinweises auf die Patenterteilung: **23.03.2011**
(21) Anmeldenummer: 07711532.7
(22) Anmeldetag: 14.02.2007
(51) Int. Cl.: F16D 65/56, F16D 65/38

(54) **RADBREMSE**
WHEEL BRAKE
FREIN DE ROUE

(30) Priorität: 16.02.2006 DE 202006002580 U
(43) Veröffentlichungstag der Anmeldung: 29.10.2008
(73) Patentinhaber: AL-KO Kober AG, D-89359 Kötz (DE)
(72) Erfinder: KOBER, Kurt, 89359 Kötz (DE); BECK, Gerhard, 89343 Jettingen-Scheppach (DE); ECKLE, Volker, 89198 Westerstetten (DE); FINK, Bernd, 89359 Kötz (DE); HENNIG, Robert, 89358 Kammeltal/OT Hammerstetten (DE); MAIRLE, Josef, 89359 Kötz (DE)
(74) Vertreter: Ernicke, Hans-Dieter
(86) Internationale Anmeldenummer: PCT/EP2007/001277
(87) Internationale Veröffentlichungsnummer: WO 2007/093399

(56) Entgegenhaltungen:
- EP-A1- 0 261 660
- DE-U1- 9 002 587
- GB-A- 1 011 465
- US-A- 3 712 425

## Beschreibung

Die Erfindung betrifft eine Radbremse mit den Merkmalen im Oberbegriff des Hauptanspruchs.

Eine solche Radbremse in Form einer Innenbackenbremse mit Nachstelleinrichtung ist aus der EP 0 482 430 B1 bekannt. Sie besteht aus einer Bremstrommel mit darin gelagerten Innenbremsbacken, die an ihren Enden mittels einer Abstützung und einer Spreizeinrichtung miteinander verbunden sind. Im Bereich der Spreizeinrichtung ist eine Nachstelleinrichtung angeordnet, welche ein Einstellteil in Form eines Nachstellzahnrads mit Gewindestößel und ein Nachstellorgan in Form eines Nachstellhebels aufweist. Der Nachstellhebel und das Nachstellzahnrad sind bei Betätigung der Radbremse relativ zueinander bewegbar, wobei der Nachstellhebel bei Auftreten von Bremsverschleiß das Nachstellzahnrad ratschenartig weiterschaltet und über den entsprechend ausgefahrenen Gewindestößel die Spreizbreite der Spreizeinrichtung vergrößert. Die vorbekannte Radbremse ist mit einer Rückfahrautomatik ausgestattet, die bei Rückwärtsfahrt das Ausweichen von mindestens einer Bremsbacke ermöglicht und die Bremswirkung mindert oder aufhebt. In einem solchen Fall tritt ein vergrößerter Bremsbetätigungshub auf, der zu einem unerwünschten Verstellen der Nachtelleinrichtung führen könnte. Um dies zu vermeiden, ist bei der EP 0 482 430 B1 die Nachstelleinrichtung mittels eines stabförmigen Verbindungsglieds mit der ausweichfähig gelagerten Bremsbacke verbunden, wobei diese Verbindung bei der Rückwärtsfahrt und bei einem Ausweichen der Bremsbacke gelöst werden kann. Diese Konstruktion wirft einerseits Toleranz- und Einstellprobleme auf und bedingt andererseits eine bestimmte Ausbildung der Rückfahrautomatik und der Bremsbacken.

Es ist Aufgabe der vorliegenden Erfindung, eine verbesserte Radbremse mit einer Nachstelleinrichtung aufzuzeigen.

Die Erfindung löst diese Aufgabe mit den Merkmalen im Hauptanspruch.
Die beanspruchte Ausgestaltung der Nachstelleinrichtung hat den Vorteil, dass sie sich für beliebige Radbremsen und für beliebige Ausführungen einer Rückfahrautomatik eignet. Die mit der Nachstelleinrichtung versehene Spreizeinrichtung kann auch bei Radbremsen ohne Rückfahrautomatik vorgesehen sein und ermöglicht deren späteres Nachrüsten. Ferner lassen sich auch vorhandene Radbremsen mit der Nachstelleinrichtung nachrüsten.

Von besonderem Vorteil sind die hohe Betriebssicherheit der Nachstelleinrichtung sowie der geringe Bau- und Platzaufwand. Die Spreizeinrichtung mit der Nachstelleinrichtung hat im wesentlichen die gleiche Baugröße und die gleichen Anschlüsse wie eine konventionelle Spreizeinrichtung. Dies erlaubt eine Standardisierung der Radbremse. Eine spezielle Adaption der anderen Radbremsteile, insbesondere der Bremsbacken, ist nicht erforderlich. Günstig wirken sich ferner die mechanische Robustheit der beanspruchten Nachstelleinrichtung sowie ihre einfache Bedienbarkeit aus.

Die Löseeinrichtung ist integraler Bestandteil der Nachstelleinrichtung und wirkt intern, indem bei Bedarf der Eingriff der Einrichtungsteile gelöst wird. Diese Technik ist weniger toleranz- und fehleranfällig als beim Stand der Technik und bietet eine höhere Betriebs- und Funktionssicherheit.

Die Löseeinrichtung kann bei Auftreten eines vergrößerten Bremshubs aktiv werden, der nur temporär auftritt und reversibel ist, wobei die Ursache für die Bremshubvergrößerung gleichgültig ist. Hierdurch kann sowohl auf eine Bremshubvergrößerung bei Rückwärtsfahrt und ausweichenden Bremselementen, als auch bei verschleißmäßig oder thermisch bedingten oder aus anderen Gründen vorhandenen anormalen Hubvergrößerungen reagiert werden. Die Aktivierung kann vom Bremshub direkt abhängig sein und insbesondere bei Überschreiten einer vorgebenen Hubgröße oder Schaltschwelle erfolgen. Die Hubgröße ist vorzugsweise der Auslöser. Die Löseeinrichtung kann dadurch ursachenneutral reagieren und zuverlässig verhindern, dass in solchen Fällen eine unerwünschte Bremsnachstellung erfolgt. Die Nachstelleinrichtung kann zwischen Normalbetrieb der Bremse und ungewöhnlichen Betriebsbedingungen unterscheiden, so dass ein Nachstellen der Bremse zur Kompensation des normalen Bremsverschleisses geschieht

Vorteilhaft ist außerdem, dass die Radbremse an der Abstützung einen zusätzlichen Einstellmechanismus haben kann, um die Grundeinstellungen der Radbremse vorzunehmen. Die Nachstelleinrichtung an der Spreizeinrichtung braucht dann nur noch für die Verschleißaufnahme im Betrieb zu sorgen.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Stirnansicht einer geöffneten Radbremse bei abgenommener Bremstrommel,
- Figur 2:: eine Draufsicht auf die Radbremse von Figur 1 gemäß Pfeil II nebst angedeuteter Bremstrommel und Fahrzeugrad,
- Figur 3:: eine perspektivische Ansicht einer aufgeschnittenen Radbremse in ungebremster Stellung,
- Figur 4:: eine perspektivische Ansicht einer aufgeschnittenen Radbremse in Bremsstellung,
- Figur 5 und 6:: unterschiedliche perspektivische Ansichten einer geöffneten Radbremse,
- Figur 7:: eine vergrößerte Stirnansicht einer Spreizeinrichtung mit einer Nachstelleinrichtung,
- Figur 8:: eine vergrößerte und gedrehte Seitenansicht der Nachstelleinrichtung gemäß Pfeil XIII von Figur 7,
- Figur 9 bis 11:: verschiedene perspektivische Ansichten der Spreizeinrichtung mit der Nachstelleinrichtung in verschiedenen Betriebsstellungen,
- Figur 12 bis 17:: eine Variante der Nachstelleinrichtung in verschiedenen Ansichten und
- Figur 18 und 19:: einen Fahrzeuganhänger mit Radbremsen und einer Auflaufbremseinrichtung in Seitenansicht und Draufsicht.

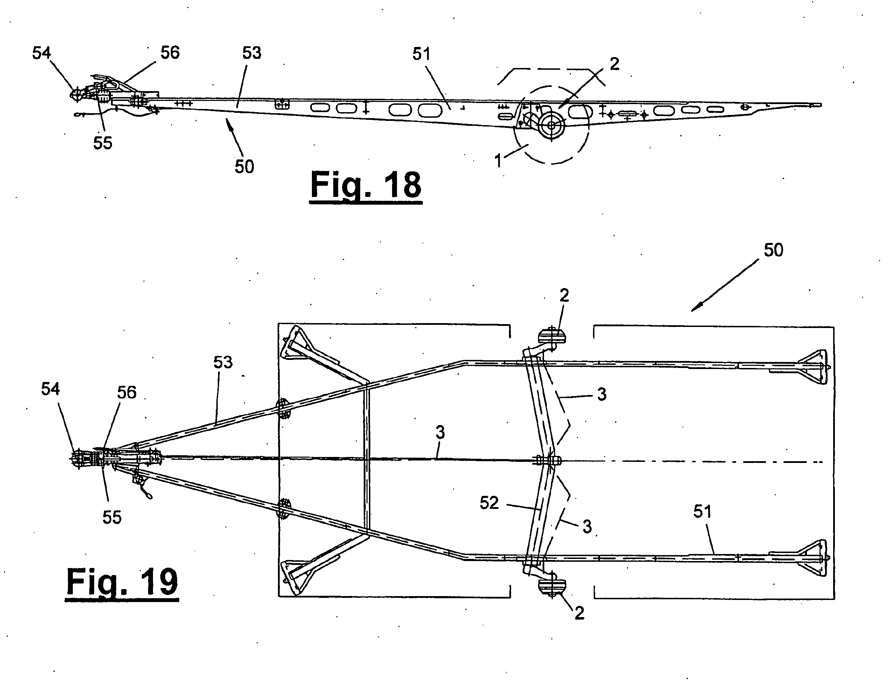

Die Erfindung betrifft eine Radbremse (2) für Fahrzeugräder (1) und ein damit ausgerüstetes Fahrzeug (50). Hierbei handelt es sich z.B. um den in Figur 18 und 19 gezeigten Fahrzeuganhänger mit einem Fahrgestell (51), mit ein oder mehreren Achsen (52) und mit einer starren oder beweglichen Zugdeichsel (53), an der eine Anhängerkupplung (54) und eine Auflaufbremseinrichtung (55) sowie eine ggf. mit einem Federspeicher ausgestattete Handbremseinrichtung (56) angeordnet sind. Von den Bremseinrichtungen (55,56) werden die Bremskräfte mittels eines Bremsbetätigungsorgans (3), z.B. eines Bremsgestänges und/oder eines Seilzugs auf die Radbremsen (2) übertragen.

Die Radbremse (2) ist im gezeigten Ausführungsbeispiel als Trommelbremse ausgebildet und besteht aus ein oder mehreren Bremsbacken (6,7), die innerhalb der Bremstrommel (5) angeordnet sind und mittels einer Spreizeinrichtung (13) unter Einwirkung des Betätigungsorgans (3) gegen die Rückstellkraft von nicht dargestellten Bremsenfedern gespannt oder gelöst werden. Die Bremsbacken (6,7) bestehen z.B. aus einem konzentrisch zur Radnabe gebogenen Belagträger und einem damit fest verbundenen, quer abstehenden Steg (9). Die Bremsbacken (6,7) sind in der Radbremse (2) zwischen einem rückseitigen Bremsschild (4) und der Bremstrommel (5) angeordnet und werden durch Federn am Bremsschild (4) in führender Anlage gehalten. An der Bremstrommel (5) wird das Fahrzeugrad (1) in geeigneter Weise befestigt.

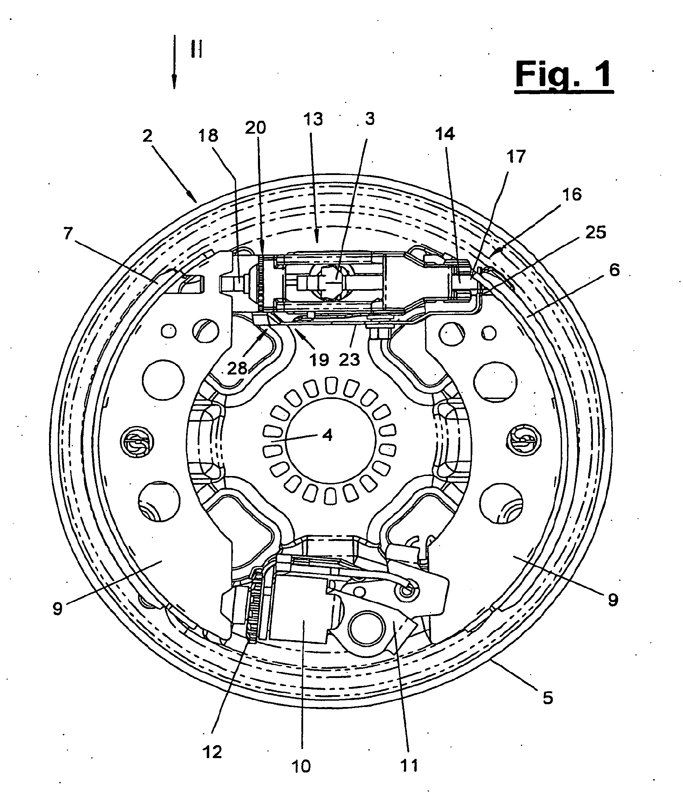

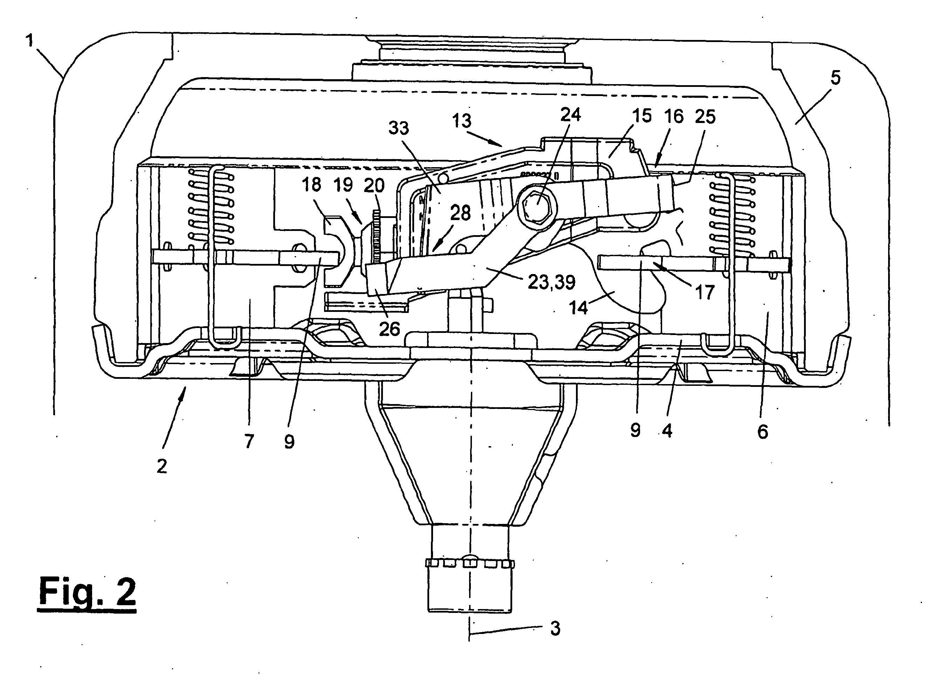

Zwischen den Bremsbacken (6,7) und deren Stegen (9) ist am einen Ende die schwimmend gelagerte Spreizeinrichtung (13) angeordnet. Am anderen Ende ist eine mit dem Bremsschild (4) verbundene Abstützung (10) vorhanden, welche die Backenenden miteinander verbindet und im normalen Bremsbetrieb ortsfest abstützt. Figur 1 und 2 verdeutlichen diese Ausgestaltung.

Die Radbremse (2) kann mit einer Rückfahrautomatik (11) versehen sein, welche bei Rückwärtsfahrt des Fahrzeugrads (1) die Bremswirkung mindert oder aufhebt, wobei zumindest eine Bremsbacke (6,7) außer Eingriff mit der Bremstrommel (5) gebracht wird. Die Rückfahrautomatik (11) kann in verschiedener Weise ausgebildet und angeordnet sein. In der gezeigten Ausführungsform ist sie entsprechend der EP 0 261 660 A1 ausgebildet und besteht aus einem Stützglied und mindestens einem bei Rückwärtsfahrt ausweichenden Nocken. Dies ermöglicht bei Rückwärtsfahrt eine gegenseitige Annäherung der Bremsbackenenden und eine Aufhebung der Bremswirkung. Alternativ kann die Rückfahrautomatik wie in der EP 0 482 430 B1 ausgebildet sein und bei Rückwärtsfahrt ein Ausweichen eines Belagträgers der Bremsbacke gegenüber seinem Steg erlauben.

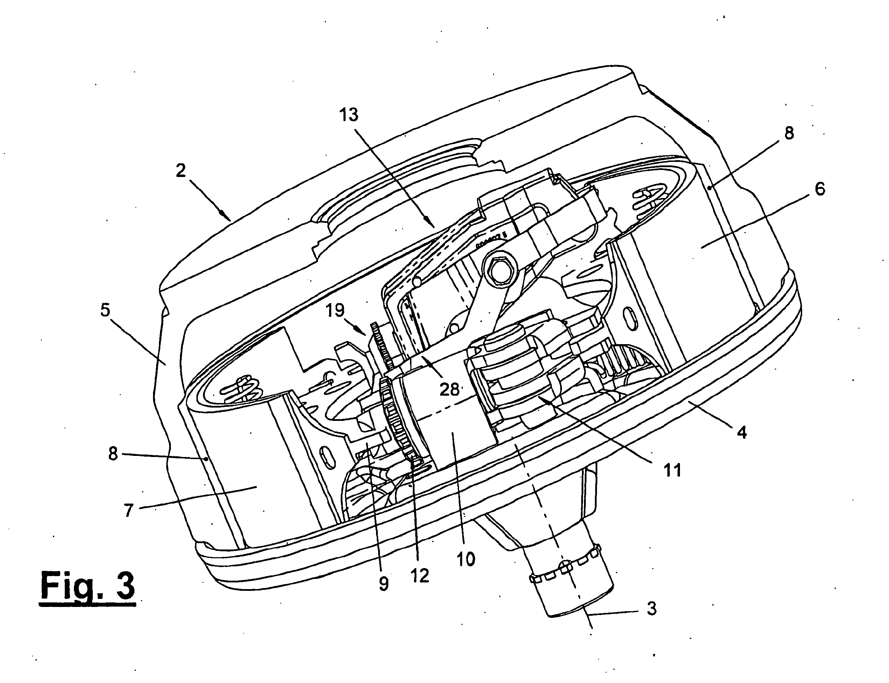

In der gezeigten Ausführungsform ist an der Abstützung (10) ein Einstellmechanismus (12) angeordnet, der ein Nachstellzahnrad mit einem Gewindestößel aufweist, wobei das Nachstellzahnrad durch eine Öffnung im Bremsschild (4) von außen her zugänglich ist und bei montierter Radbremse (2) eine Nachstellung ermöglicht. Über den Einstellmechanismus (12) kann die Stützweite der Abstützung (10) verändert werden. Dies ermöglicht eine Einstellung und Justierung der Bremsbacken (6,7) und ihrer Bremsluft in Lösestellung. Figur 3 zeigt diese Bremsluft (8) zwischen Bremsbacken (6,7) und Bremstrommel (5).

Die Spreizeinrichtung (13) ist mit einer Nachstelleinrichtung (19) versehen, mit welcher der Verschleiß der Bremsbeläge automatisch kompensiert werden kann. Mit zunehmenden Verschleiß wird der zum Anlegen der Bremsbacken (6,7) an der Bremstrommel (5) erforderliche Zuspannweg oder Spreizweg größer. Mit der Nachstelleinrichtung (19) wird diese Wegvergrößerung kompensiert.

Die Nachstelleinrichtung (19) ist außerdem mit einer Löseeinrichtung (28) versehen, welche bei einem vergrößerten und anormalen Bremsbetätigungshub die Nachstelleinrichtung (19) außer Kraft setzt. Die Löseeinrichtung (28) wird z.B. durch das Auftreten des vergrößerten Bremsbetätigungshubs und ggf. in Abhängigkeit von der Größe der Hubzunahme aktiviert. Ein solcher vergrößerter Hub am Bremsbetätigungsorgan (3) entsteht z.B. bei der vorerwähnten Rückwärtsfahrt unter der Einwirkung einer Rückfahrautomatik (11). Die ein oder mehreren ausweichenden Bremsbacken (6,7) ermöglichen eine Vergrößerung des Spreizwegs an der Spreizeinrichtung (13). Ohne Löseeinrichtung (28) würde diese Wegvergrößerung als Verschleiß von der Nachstelleinrichtung (19) fehlinterpretiert werden und zu einer irreversiblen Spreizwegnachstellung führen. Daneben sind auch andere Ursachen für eine Hubvergrößerung möglich, z.B. thermisch bedingte temporäre und reversible Dehnungen oder dgl..

Die Nachstelleinrichtung (19) besitzt ein Stellteil (20) und ein Nachstellorgan (23), die bei der Bremsbetätigung unter Einwirkung des Betätigungsorgans (3) relativ zueinander bewegt werden. Mit der Löseeinrichtung (28) wird bei Auftreten eines vergrößerten Bremsbetätigungshubs und z.B. bei Überschreiten einer vorgegebenen Hubgröße oder Schaltschwelle der Nachstelleingriff von Stellteil (20) und Nachstellorgan (23) gelöst, so dass keine Nachstellung erfolgt. Die Bremsbacken (6,7) können nach Beendigung der Rückwärtsfahrt und erneuter Vorwärtsfahrbewegung wieder in ihre Ausgangsposition für einen normalen Brems- und Nachstellbetrieb zurückkehren.

Die Spreizeinrichtung (13) kann in beliebig geeigneter Weise ausgebildet sein und ist z.B. als ein Spannschloss gestaltet, welches von einem Bremsseil bzw. einem Bowdenzug (3) betätigt wird. Die Spreizeinrichtung (13) besitzt ein Spreizelement (14), welches im Falle eines Spannschlosses als Spannhebel ausgebildet ist, der mittels einer Schwenkachse (32) an einem gabelförmigen Gehäuse (15) drehbar gelagert und mit dem Betätigungsorgan (3) verbunden ist. Der Spannhebel (14) hat am einen Hebelende (16) eine Ausnehmung (17) als Backenaufnahme, in welche formschlüssig der Steg (9) der einen Bremsbacke (6) greift.

Am Gehäuse (15) ist an dem der anderen Bremsbacke (7) zugekehrten Ende das Stellteil (20) angeordnet, welches mittels einer Backenaufnahme (18), z.B. einem Gabelstück, in Eingriff mit dem Steg (9) der anderen Bremsbacke (7) steht. Die Hebelübersetzung des Spannhebels (14) ist so gewählt, dass beim Anziehen des Betätigungsorgans (3) der Abstand zwischen den Backenaufnahmen (17,18) und der hierdurch gebildete Spreizweg vergrößert wird.

Das Stellteil (20) kann in beliebig geeigneter Weise ausgebildet sein. Im gezeigten Ausführungsbeispiel besteht es aus einem Stirnzahnrad (21), welches um eine in Spreizrichtung liegende Achse drehbar am Gehäuse (15) gelagert und mit einem Gewindestößel (22) verbunden ist. Der Gewindestößel (22) trägt an seinem vorderen freien Ende das erwähnte Gabelstück (18) und ist über ein Gegengewinde im Zahnrad (21) oder an anderer geeigneter Stelle gelagert. Eine Drehung des Zahnrades (21) bewirkt dadurch eine Längsverstellung des Gewindestößels (22) und der Backenaufnahme (18).

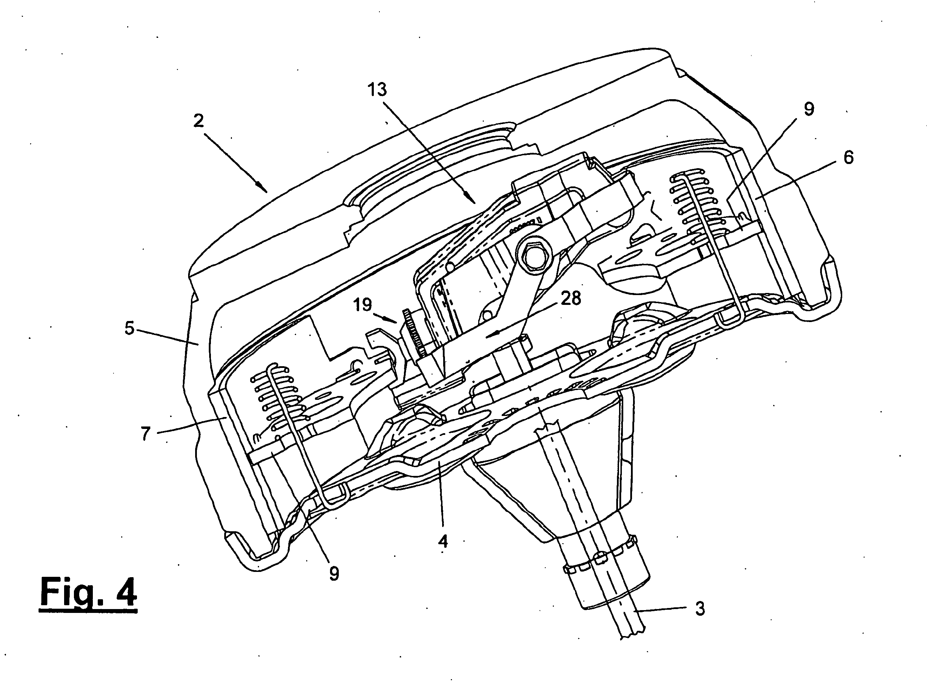

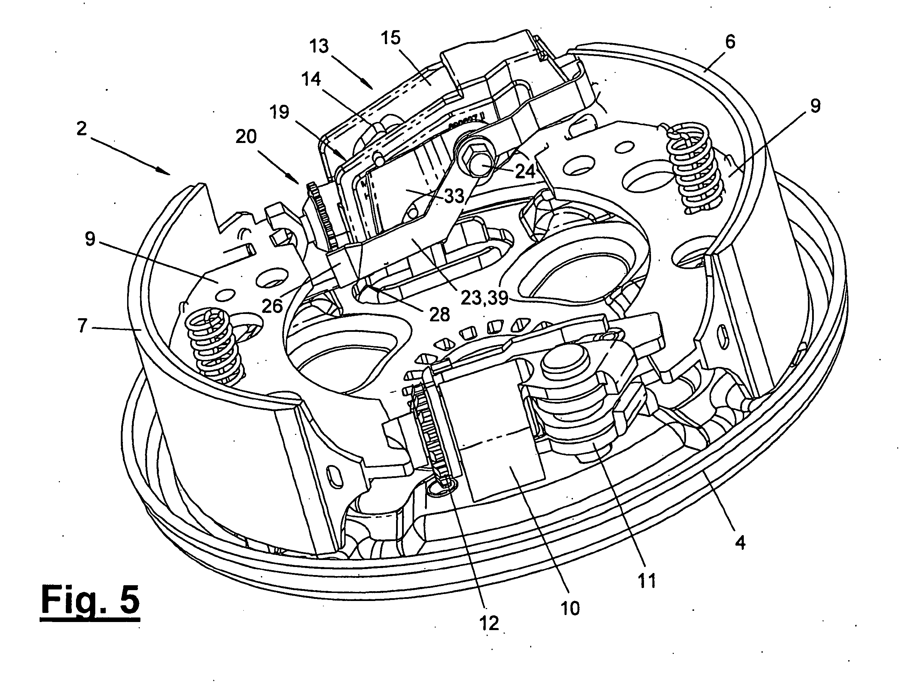

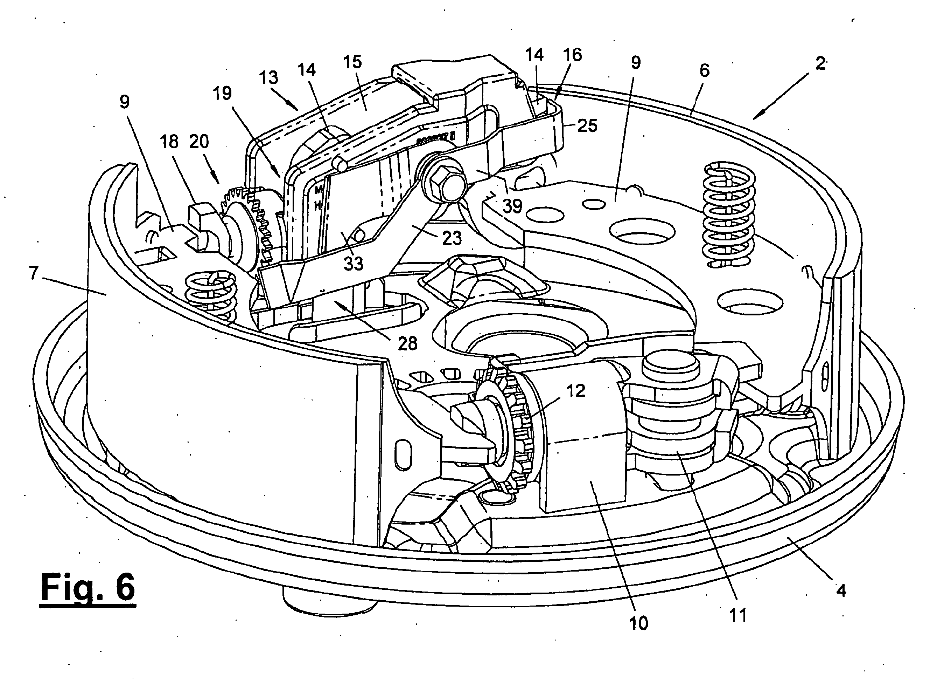

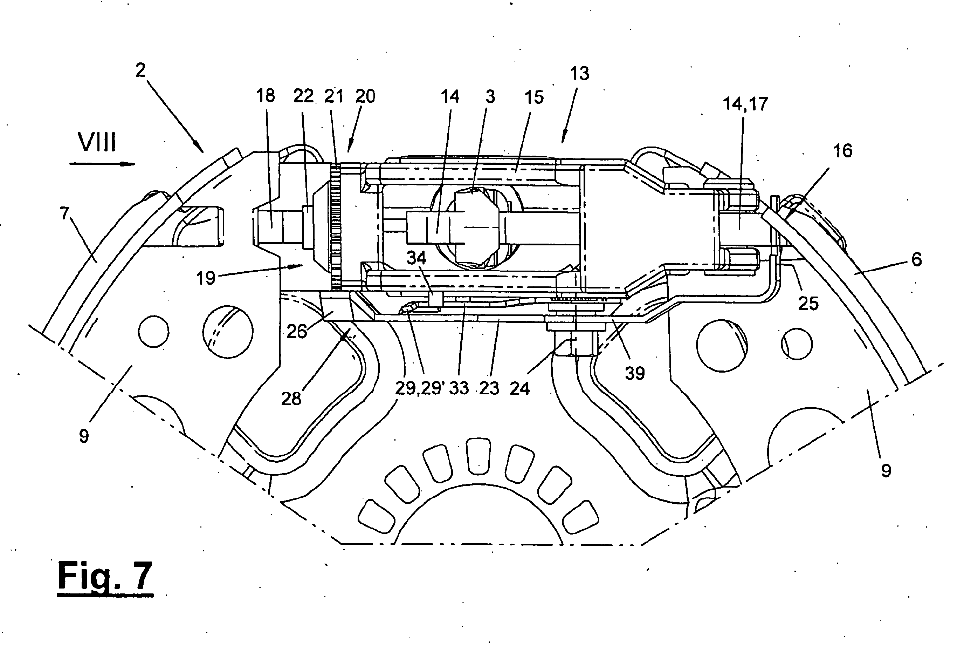

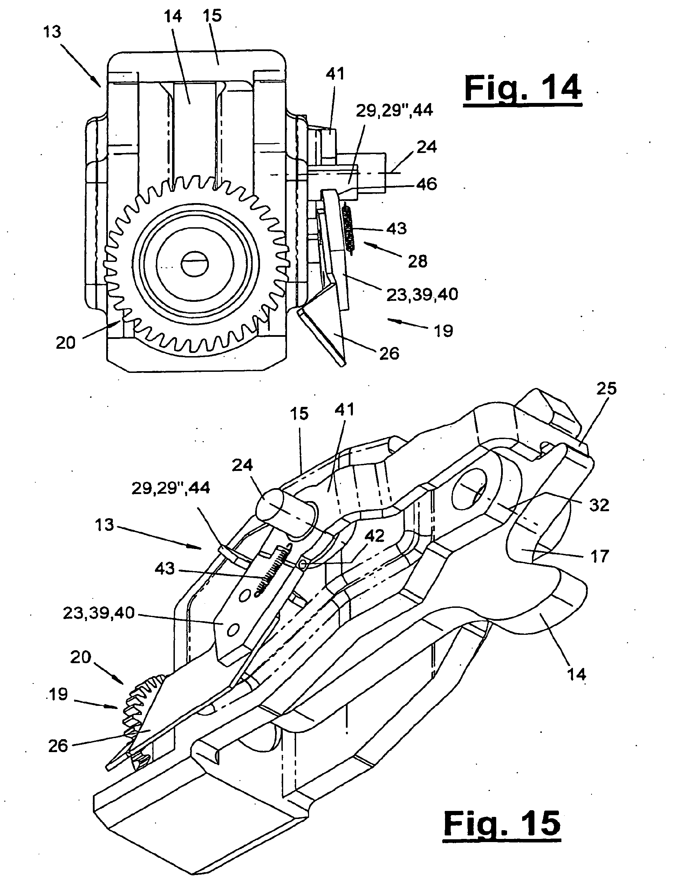

Das Nachstellorgan (23) der Nachstelleinrichtung (19) ist z.B. als einteiliger oder mehrteiliger Nachstellhebel ausgebildet, der um eine Schwenkachse (24) drehbar am Gehäuse (15) gelagert ist. In den Zeichnungen von Figur 1 bis 11 und Figur 12 bis 17 sind zwei Varianten des Nachstellorgans (23) dargestellt.

Der Nachstellhebel (23) besitzt in der Ausführungsform von Figur 1 bis 11 einen einteiligen und abgewinkelten Hebelarm (39). Er ist an seinem rückwärtigen Ende in geeigneter Weise mit der Bremsbetätigung verbunden. Dies kann z.B. über einen abgewinkelten Mitnehmer (25) erfolgen, der in eine Ausnehmung (38) am hinteren Hebelende (16) des Spannhebels (14) formschlüssig eingreift. Eine Drehung des Spannhebels (14) bewirkt dann eine gleichsinnige Drehung des Nachstellhebels (23). Alternativ kann die Bremsbetätigung auf beliebige andere Weise in eine entsprechende Drehung des Nachstellhebels (23) umgesetzt werden.

Am vorderen Armende hat der Nachstellhebel (23) eine mehrfach abgewinkelte Stellnase (26), welche mit einer Vorderkante (27) in Eingriff mit dem Stellteil (20) und insbesondere dem Zahnrad (21) tritt. Der Hebelarm (39) kann im Bereich zwischen der Schwenkachse (24) und der Stellnase (26) eine abgewinkelte Form haben. Der Hebelarm (39) besteht aus einem flachen Blechteil, dessen Hauptebene im wesentlichen parallel zur benachbarten Oberfläche des Gehäuses (15) ausgerichtet ist und sich quer zur Schwenkachse (24) erstreckt. Durch diese Gestaltung hat der Nachstellhebel (23) eine Biegeelastizität, welche für die nachfolgend erläuterte Löseeinrichtung (28) bedeutsam ist und ein Lösen des Eingriffs mit dem Zahnrad (21) durch elastische Verformung des Hebelarms (39) ermöglicht.

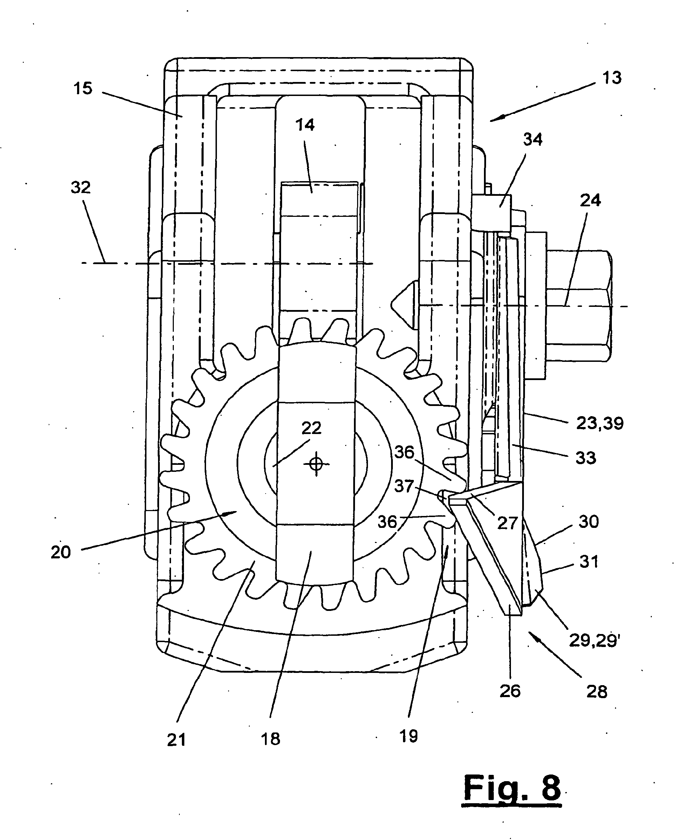

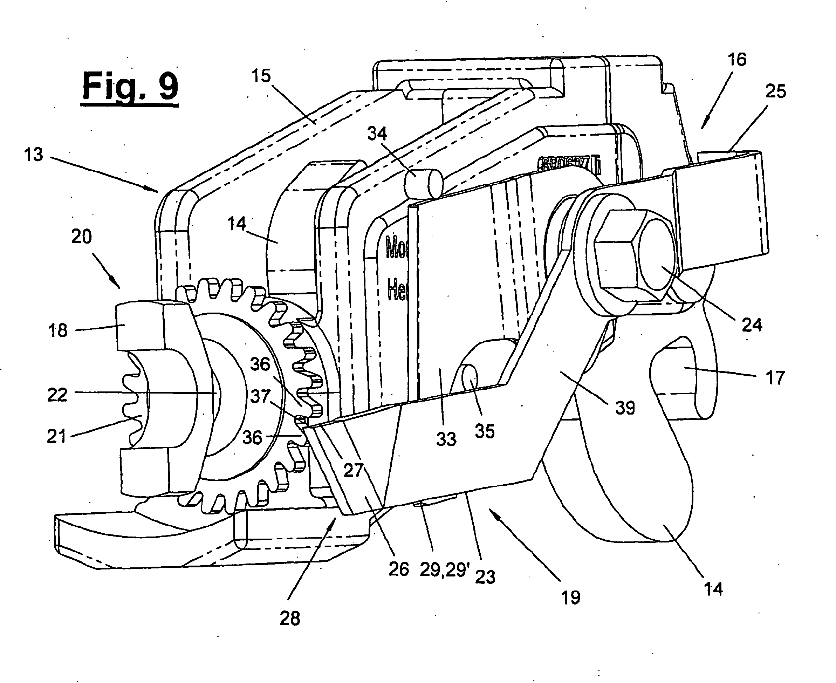

Figur 8 und 9 verdeutlichen den Eingriff des Nachstellorgans (23) und des Stellteils (20) im normalen Bremsbetrieb. Die zum Zahnrad (21) hin zweifach abgewinkelte Stellnase (26) greift bei entspannter Spreizeinrichtung (23) in den Zwischenraum (37) zwischen zwei Zähnen (36) des Zahnrads (21). Die Hebelauslegung und die Zahnradgeometrie sind derart aufeinander abgestimmt, dass im normalen Bremsbetrieb und mit den dabei auftretenden Spreizwegen die Vorderkante (27) sich in diesem Freiraum oder Zahnspiel (37) hin und her bewegt und keine Drehung des Zahnrads (21) auslöst. Die Zähne (36) können eine Neigung in Stellrichtung haben, welche dieses betätigungsfreie Hebelspiel unterstützt. Wenn Verschleiß auftritt und der Spreizweg entsprechend größer wird, vergrößert sich auch der Schwenkweg des Nachstellhebels (23), wobei die Vorderkante (27) über den benachbarten Zahn (36) gleitet und in die nächstfolgende Ausnehmung (37) taucht. Die Stellnase (26) wird hierbei z.B. in der in Figur 9 durch einen Richtungspfeil gekennzeichneten Weise gegen den Uhrzeigersinn gedreht. Beim Entspannen der Radbremse (2) und einem Zurückdrehen des Nachstellhebels (23) hintergreift die Nachstellnase (26) den überfahrenen Zahn (36) und dreht bei der Rückwärtsbewegung das Zahnrad (21) um eine Zahnteilung weiter.

Wenn in der eingangs erwähnen Weise ein vergrößerter Bremsbetätigungshub auftritt, der über das normale Bremsluftspiel und über die Aufnahme eines normalen Verschleißes hinausgeht, würde ohne die Löseeinrichtung (28) die Stellnase (26) beim Entspannen der Bremse das Zahnrad (21) drehen und die Radbremse nachstellen, obwohl kein aufzunehmender Verschleiß vorliegt. Dies würde zu einer dauerhaften Vergrößerung des Spreizwegs und zu einem Anliegen der Bremsbacken (6,7) im normalen Fahrbetrieb an der Bremstrommel (5) führen. Unter Umständen würde die Radbremse (2) blockieren. Ferner wäre es möglich, dass die Rückfahrautomatik (11) nicht wieder in ihre Ausgangsposition zurückkehrt und die Abstützung (10) ihre normale Wirkung nicht mehr einnehmen kann. Dies wird durch die Löseeinrichtung (28) in der vorerwähnten Weise verhindert.

Die Löseeinrichtung (28) besitzt ein Steuerorgan (29), insbesondere ein Huborgan, welches bei Auftreten und in Abhängigkeit von einem vergrößerten Bremsbetätigungshub und einer entsprechend großen Relativbewegung von Stellteil (20) und Nachstellorgan (23) diese Teile (20,23) voneinander distanziert und außer Eingriff bringt. Das Steuerorgan (29) ist dazu an einer Position im Bewegungsbereichs des Nachstellorgans (23) angeordnet, die außerhalb des normalen Stellwegs zur Verschleißkompensation liegt und die Schaltschwelle für das Auftreten eines vergrößerten Bremsbetätigungshubs definiert. Die Ausführungsbeispiele von Figur 1 bis 11 und Figur 12 bis 17 zeigen zwei Varianten des Steuerorgans (29) .

Im Ausführungsbeispiel von Figur 1 bis 11 ist das Huborgan (29) als Nocke (29') ausgebildet und in Figur 8 dargestellt. Sie wirkt auf das Nachstellorgan (23) ein und hebt dieses soweit an, dass der Eingriff zum Stellteil (20) gelöst wird. Die Nocke (29') hat hierfür eine schräg ansteigende Nockenflanke (30) und eine anschließende abgewinkelte Nockenfläche (31), die als Auflagefläche für das Nachstellorgan (23) dienen kann. Der Übergang zwischen den Flächen (30,31) kann scharfkantig sein, wobei das Nachstellorgan (23), insbesondere der Nachstellhebel, eine entsprechende abgewinkelte Formgebung im Kontaktbereich haben kann, um eine definierte Rastposition zu bilden. Die abgewinkelte Nockenfläche (31) kann im wesentlichen senkrecht zur Schwenkachse (24) ausgerichtet sein, so dass der aufgleitende Nachstellhebel (23) in diesem Bereich im wesentlichen verformungsfrei aufliegt und durch Reibkraft gehalten wird. Alternativ kann die Nockenfläche (31) schräg abwärts abgewinkelt sein, was zu einer entsprechenden elastischen Verformung des Nachstellhebels (23) und zu einer entsprechenden formschlüssigen Sicherung der eingenommenen Hebelposition führen kann.

Das Huborgan (29) kann ortsfest am Gehäuse (15) angeordnet sein. In der gezeigten und bevorzugten Ausführungsform ist das Huborgan (29) bzw, die Nocke (29') auf einem Schwenkhebel (33) angeordnet, der zwischen dem Nachstellhebel (23) und der benachbarten Wandung des Gehäuses (15) angeordnet ist. Der Schwenkhebel (33) ist seinerseits drehbar an der Spreizeinrichtung (13) und am Gehäuse (15) gelagert. Vorzugsweise hat er die gleiche Schwenkachse (24) wie der Nachstellhebel (23).

Der Schwenkweg des Schwenkhebels (33) ist begrenzt. Hierfür können stationäre Anschläge (34,35) am Gehäuse (15) angeordnet sein. Der aus einem flachen Blechteil gebildete Schwenkhebel (33) kann eine abgewinkelte Form aufweisen und am vorderen Ende einen aufgebogenen Randbereich nebst der hochgebogenen Nocke (29') aufweisen. Der Schwenkweg des Schwenkhebels (33) ist auf die Zahnweite des Zahnrads (21) abgestimmt.

Im normalen Bremsbetrieb können der Schwenkhebel (33) und das Huborgan (29) außer Funktion sein und eine Ruhestellung am unteren Anschlag (35) einnehmen. Der entsprechend der Bremsbetätigung hin und her geschwenkte Nachstellhebel (23) bewegt sich innerhalb des Zahnspiels und dreht bei Verschleiß das Zahnrad (21) ggf. um einen Zahn weiter. Ggf. kann der Nachstellhebel (23) bei dieser Verschleißkompensation auf der schrägen Nockenflanke (30) ein kleines Stück aufgleiten und dadurch leichter über den Zahn (36) gleiten. Der Nachstellhebel (23) hält den Schwenkhebel (33) in der Anschlagposition am unteren Anschlag (35).

Erst bei Auftreten des vergrößerten Bremsbetätigungshubs gleitet der Nachstellhebel (23) auf der entsprechend positionierten schrägen Nockenflanke (30) bis zu deren oberem Ende auf und liegt anschließend mit federnder Spannkraft auf der Nockenfläche (31). Durch dieses Anheben des Hebelarms kommt die Vorderkante (27) außer Eingriff mit dem Zahnrad (21).

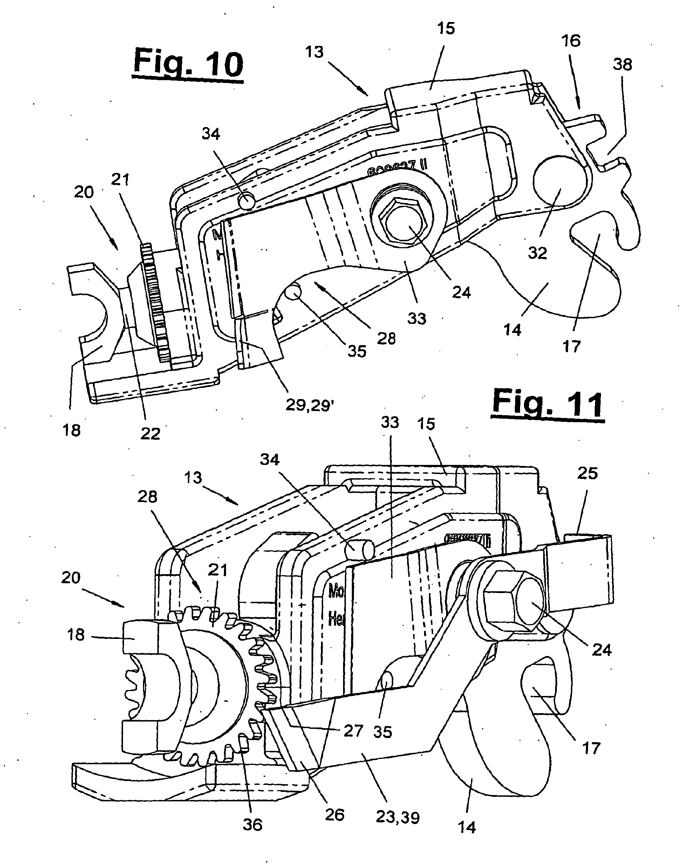

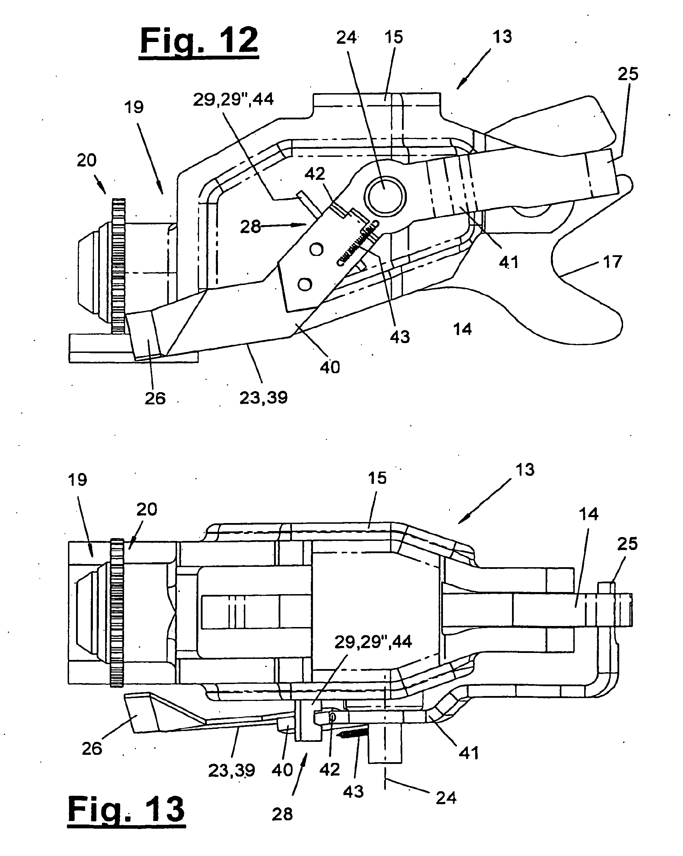

Beim Lösen des Bremsbetätigungsorgans (3) wird der Nachstellhebel (23) über die inneren Federkräfte der Radbremse (2) und den Spannhebel (14) wieder zurückbewegt, wobei er über den Reibschluss und ggf. Formschluss den Schwenkhebel (33) mitnimmt, bis dieser am oberen Anschlag (34) zur Anlage kommt und stehen bleibt. Erst aus dieser Anschlagstellung heraus bewegt sich der Nachstellhebel (23) über seinen weiteren Schwenkweg relativ zur Nocke (29') und gleitet an dieser wieder entlang nach unten, bis die Vorderkante (27) wieder in Eingriff mit dem Zahnrad (21) tritt. Durch diese Gestaltung wird erreicht, dass die Vorderkante (27) der Stellnase (26) wieder genau in die Ausgangsstellung am Zahnrad (21) und in den Zahnzwischenraum (37) zurückkehrt ohne das Zahnrad (21) in unerwünschter Weise zu drehen. Durch den Schwenkhebel (33) bleibt der Nachstellhebel (23) im Anfangsbereich der Rückschwenkbewegung genügend lange in angehobener Stellung eingriffsfrei über dem Zahnrad (21) und taucht erst an der gewünschten Position wieder in den Zahneingriff ab. Figur 10 und 11 verdeutlichen diese vorbeschriebene Situation. In Figur 10 ist der Schwenkhebel ohne den Nachstellhebel (23) zu sehen. Im normalen Brems- und Nachstellbetrieb drückt der abgesenkte Nachstellhebel (23) mit seinem Hebelarm (39) den Schwenkhebel wieder zurück in die Ausgangsposition am unteren Anschlag (35). Figur 12 bis 17 zeigen eine Abwandlung der Nachstelleinrichtung (19) und der Löseeinrichtung (28). Die anderen Teile der Spreizeinrichtung (13) und der Radbremse (2) können die gleichen wie im vorbeschriebenen Ausführungsbeispiel sein. Gleiche Bezugsziffern betreffen korrespondierende Gegenstände.

Das Nachstellorgan (23) ist wiederum als Nachstellhebel ausgebildet, dessen flacher Hebelarm (39) in diesem Fall zweiteilig ausgebildet ist. Die beiden Armteile (40,41) sind durch ein quer zur Armrichtung liegendes Gelenk (42) miteinander verbunden. Das Gelenk (42) befindet sich zwischen der Schwenkachse (24) und der Stellnase (26). Der vordere Armteil (40) der Stellnase (26) kann über das Gelenk (42) auf und ab geschwenkt werden und dabei eine Hub- und Senkbewegung ähnlich wie der elastisch verformbare Hebelarm (39) im ersten Ausführungsbeispiel ausführen.

Der klappbare Hebelarm (39) weist eine Feder (43) auf, die das Gelenk (42) überbrückt und die endseitig an je einem Armteil (40,41) befestigt ist. Die Feder (43) wirkt in Löserichtung des Nachstelleingriffs und versucht die Stellnase (26) vom Stellelement (20) abzuheben. Hierzu ist z.B. die Feder (43) als Zugfeder ausgebildet und an der Oberseite des Hebelarms (39) angeordnet.

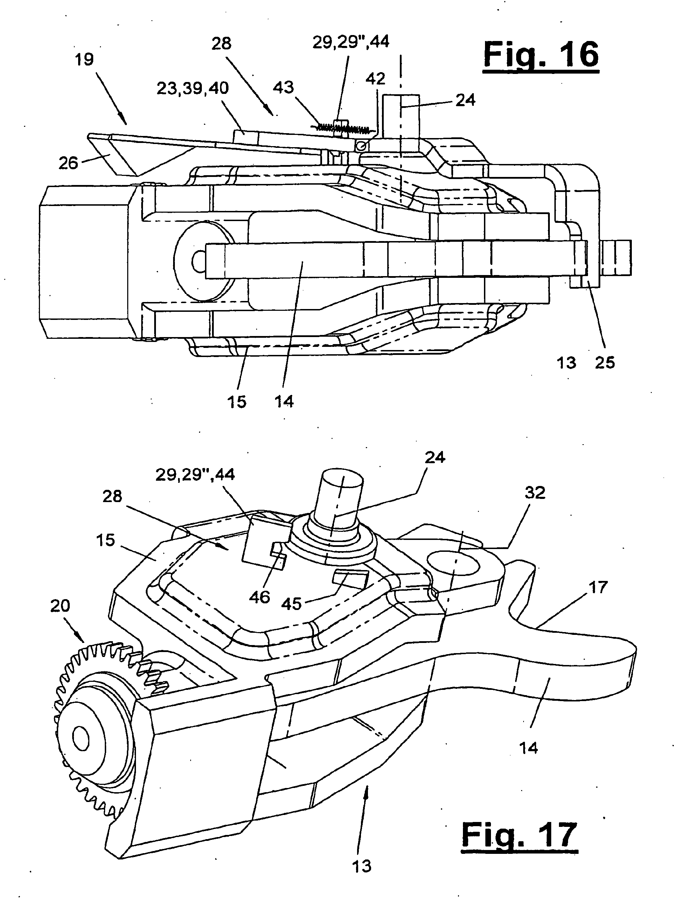

Die Löseeinrichtung (28) besitzt in dieser Variante ein Steuerorgan (29) in Form einer Kulissenführung (29"). Die Kulissenführung (29") ist z.B. stationär an der dem Nachstellhebel (23) zugewandten Außenwandung des Gehäuses (15) angeordnet und befindet sich in einer Position im Bewegungsbereich des Nachstellhebels (23), welche die Schaltschwelle für das Auftreten eines vergrößerten Bremsbetätigungshubs definiert. Die Kulissenführung (29") ist in Figur 17 ohne Nachstellhebel (23) dargestellt.

Die Kulissenführung (29") führt den vorderen Armteil (40) mit der Stellnase (26) in Abhängigkeit von der Hebelstellung bzw. der Drehstellung des Nachstellhebels (23) und steuert dessen Löse- und Eingriffsbewegung. Hierfür besitzt die Kulissenführung (29") mindestens eine Führungsleiste (44), die mit mindestens einer Hubbahn (45) und mit einer Senkbahn (46) versehen ist. Die Feder (43) hält den vorderen Armteil (40) in Führungskontakt mit der Senkbahn (46). Die Führungsleiste (44) kann als ein- oder mehrteiliger Führungsbügel ausgebildet sein.

Wie Figur 17 verdeutlicht, ist das Leistenteil mit der schrägen Hubbahn (45) ähnlich wie die Nocke (29') angeordnet und ausgebildet. Die Hubbahn (45) befindet sich in einem Schwenkbereich des Nachstellhebels (23), in den dieser bei Auftreten eines vergrößerten Bremsbestätigungshubs gelangt und sorgt mit ihrer schrägen Oberfläche oder Aufgleitflanke für ein Anheben bzw. Hochschwenken des vorderen Armteils (40) unter Lösen des Nachstelleingriffs. Die Schwenkbewegung wird von der Feder (43) unterstützt und kann in geeigneter Weise begrenzt werden. Z.B. kann an der Führungsleiste (44) ein Gegenhalter vorhanden sein.

Bei Beendigung der Rückwärtsfahrt und beim Zurückschwenken des Nachstellorgans (23) tritt die oberhalb des Armteils (40) angeordnete Senkbahn (46) in Funktion und drückt durch ihre schräg abfallende Ausrichtung den angleitende Armteil (40) gegen die Kraft der Feder (43) nach unten zurück in die Eingriffsstellung am Stellelement (20). Die Senkbahn (46) ist zu diesem Zweck im Schwenk- und Bewegungsbereich des Nachstellorgans (23) bei der normalen Brems- und Nachstellfunktion angeordnet. Die Senkbahn (46) kann über ihre Ausbildung und Anordnung die gleiche Funktion wie der Schwenkhebel (33) haben, indem sie den Armteil (40) und die Stellnase (26) verzögert absenkt. Die schräg abwärts gerichtete Führungsfläche der Senkbahn (46) hat hierzu eine im Schwenkwinkel zurückversetzte Position und wirkt erst senkend auf das Armteil (40) ein, wenn der Nachstellhebel (23) beim Zurückschwenken einen anfänglichen Schwenkweg zurückgelegt hat, wobei er auf diesem Schwenkweg in Lösestellung über dem Stellelement (20) gehalten wird. Die Senkbahn (46) kann auch einen anfänglichen, parallel zur Hebelschwenkbewegung ausgerichten Bereich haben, der das vorerwähnte Gegenlager bildet.

Die Führungsleiste (44) kann zugleich einen Endanschlag zur Begrenzung der Rückschwenkbegung des Nachstellhebels (23) bilden und zu diesem Zweck eine nutenförmige seitliche Ausnehmung haben. Der obere schräge Nutenrand bildet die Senkbahn (46). Der untere gehäuseparallele Rand bildet ggf. eine Auflagefläche für das Armteil (40). Die Senkbahn (46) kann auch bei den normalen Schwenk- und Nachstellbewegungen der Nachstelleinrichtung (19) wirksam sein und der Stellnase (26) im Rahmen des Zahnspiels eine kleine Hebe- und Senkbewegung verleihen.

Abwandlungen der vorbeschriebenen Ausführungsformen sind in verschiedener Weise möglich. Ferner können das Nachstellorgan (23) und das Stellteil (20) in beliebiger anderer Weise ausgebildet und an anderer Stelle angeordnet sein sowie eine andere Kinematik haben. Die Nachstellbewegung kann z.B. über eine lineare Ratschenbewegung erfolgen, wobei die Bremsbetätigungskräfte und -bewegungen entsprechend umgelenkt werden und die Löseeinrichtung (28) entsprechend anders ausgebildet ist. Die Nachstelleinrichtung (19) kann z.B. in der Art der Betätigung einer Kartuschenpistole ausgebildet sein, bei der ein Schwenkhebel mittels Schrägstellung und Klemmschluss auf eine durch eine Hebelöffnung durchgesteckte Stange einwirkt. Zum Lösen dieser Klemmverbindung kann die Abstützung des stangenförmigen Elements gelockert werden, so dass die Stange sich in einer Weise zum Hebel ausrichtet, dass die Hebelkräfte nicht übertragen werden und kein Stangenvorschub erfolgt. Ferner ist es möglich, auf ein gesondertes Nachstellorgan (23) und insbesondere einen Nachstellhebel zu verzichten und statt dessen den Spannhebel (14) als Nachstellorgan zu verwenden.

Die Löseeinrichtung (28) kann eine andere Ausbildung und Kinematik haben. Auch der Eingriff von Nachstellorgan (23) und Stellteil (20) kann auf andere Weise gelöst werden, z.B. durch ein axiales Verschieben des Stellteils (20) gegenüber dem Nachstellorgan (23). Statt des Huborgans (29) kann in diesem Fall ein Schuborgan zum Einsatz kommen. In weiterer Abwandlung ist es möglich, die Funktion und Kinematik der Löseeinrichtung (28) von der Bremsbetätigung und z.B. von den Bewegungen des Spannhebels (14), abzuleiten. Hierfür kann z.B. am Spannhebel (14) eine Auflaufkurve oder dergl. vorhanden sein, mit der bei Auftreten eines übergroßen Bremsbetätigungshubs ein Stift oder ein anderes Stellteil betätigt wird und dadurch auf das Nachstellorgan (23) zum Lösen des Eingriffs mit dem Stellteil (20) einwirkt. Dieser Stellstift kann z.B. den Nachstellhebel (23) in ähnlicher Weise wie das Steuer- oder Huborgan (29). anheben.

Variabel ist auch die Ausgestaltung der anderen Teile der Radbremse (2), insbesondere der Spreizeinrichtung (13), der Bremsbacken (6,7) und der Abstützung (10). Die Erfindung lässt sich auch mit anderen Arten von Ausbildungen, Anlenkungen und Kinematiken von Bremsbacken durchführen, die statt an einer Bremstrommel (5) an einem anderen Bremsorgan angreifen.

### BEZUGSZEICHENLISTE

- 1: Fahrzeugrad
- 2: Radbremse
- 3: Betätigungsorgan, Seilzug
- 4: Bremsschild
- 5: Bremsorgan, Bremstrommel
- 6: Bremsbacke
- 7: Bremsbacke
- 8: Bremsluft
- 9: Steg
- 10: Abstützung
- 11: Rückfahrautomatik
- 12: Einstellmechanismus
- 13: Spreizeinrichtung, Spannschloss
- 14: Spreizelement, Spannhebel
- 15: Gehäuse
- 16: Hebelende
- 17: Backenaufnahme, Ausnehmung
- 18: Backenaufnahme, Gabelstück
- 19: Nachstelleinrichtung
- 20: Stellteil
- 21: Zahnrad
- 22: Gewindestößel
- 23: Nachstellorgan, Nachstellhebel
- 24: Schwenkachse
- 25: Mitnehmer
- 26: Stellnase
- 27: Vorderkante
- 28: Löseeinrichtung
- 29: Steuerorgan, Huborgan
- 29': Nocke
- 29": Kulissenführung
- 30: Nockenflanke schräg
- 31: Nockenfläche, Auflagefläche
- 32: Schwenkachse
- 33: Schwenkhebel
- 34: Anschlag vorn
- 35: Anschlag hinten
- 36: Zahn
- 37: Zwischenraum
- 38: Ausnehmung
- 39: Hebelarm
- 40: Armteil
- 41: Armteil
- 42: Gelenk
- 43: Feder
- 44: Führungsleiste, Führungsbügel
- 45: Hubbahn
- 46: Senkbahn
- 47:
- 48:
- 49:
- 50: Fahrzeug, Fahrzeuganhänger
- 51: Fahrgestell
- 52: Achse
- 53: Zugdeichsel
- 54: Anhängerkupplung
- 55: Auflaufbremseinrichtung
- 56: Handbremseinrichtung

## Patentansprüche

1. Radbremse mit einem Bremsorgan (5), insbesondere einer Bremstrommel, Bremsbacken (6,7), einer Abstützung (10), einer Spreizeinrichtung (13) und einer im Bereich der Spreizeinrichtung (13) angeordneten Nachstelleinrichtung (19), welche ein Stellteil (20) und ein Nachstellorgan (23) aufweist, die bei der Bremsbetätigung relativ zueinander bewegbar sind, **dadurch gekennzeichnet, dass** die Nachstelleinrichtung (19) eine Löseeinrichtung (28) aufweist, die bei einem vergrößerten Bremsbetätigungshub den Eingriff von Stellteil (20) und Nachstellorgan (23) löst.

2. Radbremse nach Anspruch 1, **dadurch gekennzeichnet, dass** die Löseeinrichtung (28) in Abhängigkeit vom vergrößerten Bremsbetätigungshub den Eingriff von Stellteil (20) und Nachstellorgan (23) löst.

3. Radbremse nach Anspruch 1 oder 2, **dadurch gekennzeichnet, dass** die Radbremse (2) eine Rückfahrautomatik (11) aufweist, welche die Bremswirkung bei Rückwärtsfahrt mindert oder aufhebt.

4. Radbremse nach Anspruch 1, 2 oder 3, **dadurch gekennzeichnet, dass** die Löseeinrichtung (28) ein Steuerorgan (29) aufweist, welches bei der Relativbewegung von Stellteil (20) und Nachstellorgan (23) die Teile (20,23) distanziert.

5. Radbremse nach Anspruch 4, **dadurch gekennzeichnet, dass** das Steuerorgan (29) als Nocke (29') oder als Kulissenführung (29") ausgebildet ist.

6. Radbremse nach einem der vorhergehenden Ansprüche, **dadurch gekennzeichnet, dass** das Nachstellorgan (23) als schwenkbarer Nachstellhebel ausgebildet ist.

7. Radbremse nach einem der vorhergehenden Ansprüche, **dadurch gekennzeichnet, dass** der Nachstellhebel (23) einen biegeelastischen oder einen mittels Gelenk (42) klappbaren Hebelarm (39) aufweist.

8. Radbremse nach einem der vorhergehenden Ansprüche, **dadurch gekennzeichnet, dass** das Nachstellorgan (23) mit einem Spreizelement (14), insbesondere einem Spannhebel, drehschlüssig verbunden ist.

9. Radbremse nach Anspruch 8, **dadurch gekennzeichnet, dass** das Nachstellorgan (23) und das Spreizelement (14) an einem Gehäuse (15) der schwimmenden Spreizeinrichtung (13) angeordnet sind.

10. Radbremse nach einem der vorhergehenden Ansprüche, **dadurch gekennzeichnet, dass** das Stellteil (20) ein Zahnrad (21) mit einem ausfahrbaren Gewindestößel (22) aufweist, wobei das Nachstellorgan (23) eine mit dem Zahnrad (21) in Eingriff bringbare Stellnase (26) aufweist.

11. Radbremse nach einem der Ansprüche 4 bis 10, **dadurch gekennzeichnet, dass** das Steuerorgan (29) dem Nachstellorgan (23) zugeordnet ist.

12. Radbremse nach einem der Ansprüche 4 bis 11, **dadurch gekennzeichnet, dass** das Steuerorgan (29) am Gehäuse (15) der Spreizeinrichtung (13) stationär oder auf einem Schwenkhebel (33) beweglich angeordnet ist.

13. Radbremse nach einem der vorhergehenden Ansprüche, **dadurch gekennzeichnet, dass** die Nocke (29') eine schräg ansteigende Nockenflanke (30) und eine anschließende abgewinkelte Nockenfläche (31) zur Auflage des Nachstellorgans (23) aufweist.

14. Radbremse nach einem der vorhergehenden Ansprüche, **dadurch gekennzeichnet, dass** das Nachstellorgan (23) und der Schwenkhebel (33) gleichachsig (24) schwenkbar an der Spreizeinrichtung (13) gelagert sind.

15. Radbremse nach einem der vorhergehenden Ansprüche, **dadurch gekennzeichnet, dass** der Schwenkweg des Schwenkhebels (33) durch Anschläge (34,35) begrenzt ist.

16. Radbremse nach einem der vorhergehenden Ansprüche, **dadurch gekennzeichnet, dass** der Schwenkweg des Schwenkhebels (33) auf die Zahnweite des Zahnrads (21) abgestimmt ist.

17. Radbremse nach einem der Ansprüche 1 bis 12, **dadurch gekennzeichnet, dass** eine Kulissenführung (29") mindestens eine mit einer Hubbahn (45) und einer Senkbahn (46) versehene Führungsleiste (44) für die stellungsabhängige Steuerung der Löse- und Eingriffsbewegung des Stellorgans (23) aufweist.

18. Radbremse nach einem der Ansprüche 1 bis 12 oder 17, **dadurch gekennzeichnet, dass** ein klappbarer Hebelarm (39) eine das Gelenk (42) überbrückende und Armteile (40,41) verbindende Feder (43) aufweist.

19. Radbremse nach Anspruch 17 und 18, **dadurch gekennzeichnet, dass** die Feder (43) in Löserichtung des Nachstelleingriffs wirkt und das Nachstellorgan (23) gegen die Senkbahn (46) hält.

## Claims

1. A wheel brake having a brake element (5), in particular a brake drum, brake shoes (6, 7), a support (10), a spreading device (13) and an adjustment device (19) which is arranged in the region of the spreading device (13) and which has an actuator (20) and an adjustment element (23) which can be moved in relation to one another when the brakes are activated, **characterized in that** the adjustment device (19) has a release device (28) which releases the engagement of the actuator (20) and adjustment element (23) when an increased brake activation stroke occurs.

2. Wheel brake according to Claim 1, **characterized in that** the release device (28) releases the engagement of the actuator (20) and adjustment element (23) as a function of the increased brake activation stroke.

3. Wheel brake according to Claim 1 or 2, **characterized in that** the wheel brake (2) has an automatic reversing mechanism (11) which reduces or cancels the braking action in the case of reversing.

4. Wheel brake according to Claim 1, 2 or 3, **characterized in that** the release device (28) has a control element (29) which, during the relative movement of the actuator (20) and adjustment element (23), spaces apart the components (20, 23).

5. Wheel brake according to Claim 4, **characterized in that** the control element (29) is embodied as a cam (29') or as a slotted guide (29 ").

6. Wheel brake according to one of the preceding claims, **characterized in that** the adjustment element (23) is embodied as a pivotable adjustment lever.

7. Wheel brake according to one of the preceding claims, **characterized in that** the adjustment lever (23) has a lever arm (39) which is flexurally elastic or can be folded by means of a joint (42).

8. Wheel brake according to one of the preceding claims, **characterized in that** the adjustment element (23) is connected to a spreading element (14), in particular a tensioning lever, in a rotationally locked fashion.

9. Wheel brake according to Claim 8, **characterized in that** the adjustment element (23) and the spreading element (14) are arranged on a housing (15) of the float-mounted spreading device (13).

10. Wheel brake according to one of the preceding claims, **characterized in that** the actuator (20) has a gearwheel (21) with an extendable threaded tappet (22), the adjustment element (23) having an actuating projection (26) which can be placed in engagement with the gearwheel (21).

11. Wheel brake according to one of Claims 4 to 10, **characterized in that** the control element (29) is assigned to the adjustment element (23).

12. Wheel brake according to one of Claims 4 to 11, **characterized in that** the control element (29) is arranged on the housing (15) of the spreading device (13) in a fixed fashion or so as to be movable on a pivoting lever (33).

13. Wheel brake according to one of the preceding claims, **characterized in that** the cam (29') has an obliquely rising cam edge (30) and an adjoining bent cam face (31) for the adjustment element (23) to bear against.

14. Wheel brake according to one of the preceding claims, **characterized in that** the adjustment element (23) and the pivoting lever (33) are mounted coaxially (24) so as to be capable of pivoting on the spreading device (13).

15. Wheel brake according to one of the preceding claims, **characterized in that** the pivoting path of the pivoting lever (33) is bounded by stops (34, 35).

16. Wheel brake according to one of the preceding claims, **characterized in that** the pivoting path of the pivoting lever (33) is matched to the base tangent length of the gearwheel (21).

17. Wheel brake according to one of Claims 1 to 12, **characterized in that** a slotted guide (29 ") has at least one guide rod (44) for the position-dependent control of the release and engagement movements of the actuator (23), said guide rod (44) being provided with a lifting path (45) and with a lowering path (46).

18. Wheel brake according to one of Claims 1 to 12 or 17, **characterized in that** a foldable lever arm (39) has a spring (43) which spans the joint (42) and connects arm parts (40, 41).

19. Wheel brake according to Claim 17 or 18, **characterized in that** the spring (43) acts in the release direction of the adjustment engagement and holds the adjustment element (23) against the lowering path (46).

## Revendications

1. Frein de roue comprenant un organe de freinage (5), en particulier un tambour de frein, des mâchoires de frein (6, 7), un support (10), un dispositif d'écartement (13) et un dispositif de rattrapage (19) disposé dans la région du dispositif d'écartement (13), qui présente une pièce d'ajustement (20) et un organe de rattrapage (23), qui peuvent être déplacés l'un par rapport à l'autre lors de l'actionnement du frein, **caractérisé en ce que** le dispositif de rattrapage (19) présente un dispositif de desserrage (28), qui, dans le cas d'une course d'actionnement du frein accrue, desserre l'engagement entre la pièce d'ajustement (20) et l'organe de rattrapage (23).

2. Frein de roue selon la revendication 1, **caractérisé en ce que** le dispositif de desserrage (28) desserre l'engagement entre la pièce d'ajustement (20) et l'organe de rattrapage (23) en fonction de la course d'actionnement du frein accrue.

3. Frein de roue selon la revendication 1 ou 2, **caractérisé en ce que** le frein de roue (2) présente un système automatique de marche arrière (11), qui réduit ou supprime l'effet de frein en cas de conduite en marche arrière.

4. Frein de roue selon la revendication 1, 2 ou 3, **caractérisé en ce que** le dispositif de desserrage (28) présente un organe de commande (29), qui, lors du mouvement relatif entre la pièce d'ajustement (20) et l'organe de rattrapage (23), écarte l'une de l'autre les pièces (20, 23).

5. Frein de roue selon la revendication 4, **caractérisé en ce que** l'organe de commande (29) est réalisé sous forme de came (29') ou sous forme de guide à coulisse (29 ").

6. Frein de roue selon l'une quelconque des revendications précédentes, **caractérisé en ce que** l'organe de rattrapage (23) est réalisé sous forme de levier de rattrapage pivotant.

7. Frein de roue selon l'une quelconque des revendications précédentes, **caractérisé en ce que** le levier de rattrapage (23) présente un bras de levier (39) flexible élastique ou pouvant être rabattu au moyen d'une articulation (42).

8. Frein de roue selon l'une quelconque des revendications précédentes, **caractérisé en ce que** l'organe de rattrapage (23) est connecté à un élément d'écartement (14), notamment un levier de serrage, de manière solidaire en rotation.

9. Frein de roue selon la revendication 8, **caractérisé en ce que** l'organe de rattrapage (23) et l'élément d'écartement (14) sont disposés sur un boîtier (15) du dispositif d'écartement flottant (13).

10. Frein de roue selon l'une quelconque des revendications précédentes, **caractérisé en ce que** la pièce d'ajustement (20) présente une roue dentée (21) avec une tige poussoir filetée déployable (22), l'organe de rattrapage (23) présentant un nez d'ajustement (26) pouvant être amené en prise avec la roue dentée (21).

11. Frein de roue selon l'une quelconque des revendications 4 à 10, **caractérisé en ce que** l'organe de commande (29) est associé à l'organe de rattrapage (23).

12. Frein de roue selon l'une quelconque des revendications 4 à 11, **caractérisé en ce que** l'organe de commande (29) est disposé sur le boîtier (15) du dispositif d'écartement (13) de manière stationnaire ou est disposé de manière mobile sur un levier pivotant (33).

13. Frein de roue selon l'une quelconque des revendications précédentes, **caractérisé en ce que** la came (29') présente un flanc de came (30) montant obliquement et une surface de came coudée s'y raccordant (31) pour l'appui de l'organe de rattrapage (23).

14. Frein de roue selon l'une quelconque des revendications précédentes, **caractérisé en ce que** l'organe de rattrapage (23) et le levier pivotant (33) sont montés de manière à pouvoir pivoter sur le dispositif d'écartement (13) autour du même axe (24).

15. Frein de roue selon l'une quelconque des revendications précédentes, **caractérisé en ce que** la course de pivotement du levier pivotant (33) est limitée par des butées (34, 35).

16. Frein de roue selon l'une quelconque des revendications précédentes, **caractérisé en ce que** la course de pivotement du levier pivotant (33) est déterminée en fonction de la largeur des dents de la roue dentée (21).

17. Frein de roue selon l'une quelconque des revendications 1 à 12, **caractérisé en ce qu'**un guide à coulisse (29") présente au moins une baguette de guidage (44) pourvue d'une piste de levage (45) et d'une piste d'abaissement (46) pour la commande en fonction de la position du mouvement de desserrage et d'engagement de l'organe de rattrapage (23).

18. Frein de roue selon l'une quelconque des revendications 1 à 12 ou 17, **caractérisé en ce qu'**un bras de levier rabattable (39) présente un ressort (43) surmontant l'articulation (42) et connectant les parties de bras (40, 41).

19. Frein de roue selon les revendications 17 et 18, **caractérisé en ce que** le ressort (43) agit dans la direction de desserrage de l'engagement de rattrapage et maintient l'organe de rattrapage (23) contre la piste d'abaissement (46).
